# NEUE EUROPÄISCHE PATENTSCHRIFT

(11) **EP 3 795 862 B2**
(45) Veröffentlichungstag und Bekanntmachung des Hinweises auf die Entscheidung über den Einspruch: **18.12.2024**
(45) Hinweis auf die Patenterteilung: 08.12.2021
(21) Anmeldenummer: 19198725.4
(22) Anmeldetag: 20.09.2019
(51) Int. Cl.: F16H 57/029, F03D 15/00, F03D 80/80, F16H 57/04, H01B 17/58

(54) **ELEKTRISCH ISOLIERTES DURCHFÜHRUNGSROHR**
INSULATED FEED-THROUGH PIPE
TUBE DE TRAVERSÉE ISOLÉ

(43) Veröffentlichungstag der Anmeldung: 24.03.2021
(73) Patentinhaber: ZF Friedrichshafen AG, 88046 Friedrichshafen (DE); ZF Wind Power Antwerpen NV, 3920 Lommel (BE); VESTAS WIND SYSTEMS A/S, 8200 Aarhus N (DK)
(72) Erfinder: Strasser, Dirk, Breckerfeld (DE); Weist, Dietmar, 44379 Dortmund (DE); Stoyanov, Deyan, 44803 Bochum (DE); Sperlich, Ralf, 58452 Witten (DE)
(74) Vertreter: ZF Friedrichshafen AG

(56) Entgegenhaltungen:
- EP-A1- 2 080 904
- EP-A1- 2 541 058
- EP-A1- 2 541 058
- EP-A1- 2 933 483
- EP-A1- 3 001 062
- EP-A2- 2 273 112
- CN-U- 207 161 276
- DE-A1- 102014 200 674
- DE-A1- 102014 200 674
- DE-B3- 102014 000 044
- JP-A- S5 467 162
- US-A- 6 019 292
- US-A1- 2017 023 067

## Beschreibung

Die Erfindung betrifft eine Anordnung nach dem Oberbegriff von Anspruch 1.

Bei Windkraftanlagen ist ein Trend hin zu integrierten Antriebssträngen zu verzeichnen. Bei einem integrierten Antriebsstrang bilden das Getriebe und der Generator eine bauliche Einheit. Dies zieht Probleme mit Streuströmen nach sich. Die Streuströme können in Form von hochfrequenten Wechselströmen oder niederfrequenten Gleich- oder Wechselströmen auftreten. Es besteht die Gefahr, dass an Verzahnungen und Wälzlagern durch Spannungsüberschläge Schäden auftreten.

Um Folgeschäden aufgrund von Streuströmen zu vermeiden, müssen geeignete Maßnahmen zur Isolierung getroffen werden. Bei mittelschnell laufenden Antriebssträngen sind allerdings die zu übertragenden Drehmomente zwischen Getriebe und Generator vergleichsweise hoch. Gleichzeitig mangelt es aufgrund der integrierten Bauweise des Antriebsstrangs zwischen Getriebe und Generator an verfügbarem Bauraum. Dies erschwert eine ausreichende Dimensionierung der drehmomentübertragenden Bauteile. Dies betrifft insbesondere die elektrische Isolierung der drehmomentübertragenden Bauteile. Die Patentanmeldungen EP 2 541 058 A1 (Anordnung für eine Windkraftanlage), DE 10 2014 200674 A1 (Fixiermittel für ein Durchführungsrohr einer Windkraftanlage) und EP 3 001 062 (elektrisch isolierende Überlastkupplung für eine Windkraftanlage) zeigen den Stand der Technik.

Insbesondere eine elektrische Isolierung des sogenannten Durchführungsrohrs ist problematisch, das sich die Länge Durchführungsrohr bei Temperaturschwankungen in axialer Richtung ändert. Zugleich ändert sich der Durchmesser des Durchführungsrohrs. Aufgrund unterschiedlicher Wärmeausdehnungskoeffizienten des Durchführungsrohrs und der als elektrischer Isolator in Frage kommenden Materialien besteht daher die Gefahr, dass sich das Durchführungsrohr in dem Isolator "verklemmt".

Der Erfindung liegt die Aufgabe zugrunde, eine gegenüber den aus dem Stand der Technik bekannten Getrieben verbesserte Lösung verfügbar zu machen. Insbesondere sollen Schäden, die in einem integrierten Antriebsstrang aufgrund von Streuströmen auftreten können, vermieden werden.

Diese Aufgabe wird gelöst durch eine Anordnung nach Anspruch 1. Bevorzugte Weiterbildungen sind in den Unteransprüchen enthalten.

Bei dem Getriebe handelt es sich um ein Getriebe für eine Windkraftanlage. Ein Durchführungsrohr, auch Pitch Tube genannt, ist ein Rohr zum Durchführen von, etwa elektrischen oder hydraulischen Versorgungsleitungen durch das Getriebe. Es zeichnet sich dadurch aus, dass es durch das Getriebe bzw. das Gehäuse des Getriebes hindurchführt und seine Mündungen außerhalb des Getriebes bzw. des Gehäuses des Getriebes angeordnet sind. Gegenüber dem Gehäuse des Getriebes ist das Durchführungsrohr bevorzugt schmierstoffundurchlässig abgedichtet.

Das Durchführungsrohr ist mittels des Fixiermittels in dem Getriebe, das heißt in mindestens einer Komponente des Getriebes fixiert. Das Durchführungsrohr ist gewöhnlich rotationssymmetrisch ausgestaltet. Entsprechend ist das Fixiermittel bevorzugt ebenso rotationssymmetrisch.

Die Erfindung basiert auf der Erkenntnis, dass das Durchführungsrohr aufgrund des Umstands, dass es vollständig durch das Getriebe hindurchführt, ein maßgeblicher Überträger von Streuströmen ist. Erfindungsgemäß ist daher das Fixiermittel gegenüber dem Durchführungsrohr elektrisch isolierend ausgeführt. Das Fixiermittel isoliert also das Durchführungsrohr und die Komponente des Getriebes, in der das Durchführungsrohr mittels des Fixiermittels fixiert ist, elektrisch voneinander. Dadurch wird ein Hauptverursacher von Kriechströmen eliminiert. Die Erfindung verhindert wirkungsvoll, dass von einem Generator ausgehende Kriechströme über das Durchführungsrohr in das Getriebe eingeleitet werden. Die erfindungsgemäße Isolierung ist besonders für integrierte Antriebsstränge geeignet, da sie nur wenig Bauraum beansprucht.

Bevorzugt ist das Durchführungsrohr relativ zu dem Fixiermittel axial, d.h. in Richtung einer Drehachse, etwa einer Drehachse der Komponente, in der das Durchführungsrohr mittels des Fixiermittels fixiert ist, beweglich weitergebildet. Dadurch lassen sich Längenänderungen des Durchführungsrohrs infolge von Temperaturschwankungen ausgleichen.

Bei der Komponente des Getriebes, in der das Durchführungsrohr mittels des Fixiermittels fixiert ist, handelt es sich um einen drehbar gelagerten Planetenträger. Das Fixiermittel isoliert das Durchführungsrohr elektrisch gegenüber dem Planetenträger.

In einer bevorzugten Weiterbildung weist das Fixiermittel ein durchgehendes Loch auf. Das Loch ist zentrisch ausgerichtet, das heißt seine Mittelachse stimmt mit einer Mittelachse des Durchführungsrohrs überein. Insbesondere können das Durchführungsrohr und das Loch rotationssymmetrisch sein. In diesem Fall stimmen eine Symmetrieachse des Durchführungsrohrs und eine Symmetrieachse des Lochs überein. Das Durchführungsrohr verläuft durch das Loch hindurch und ist dort mit dem Fixiermittel verfügt.

Entlang seines radial äußeren Randes ist das Fixiermittel in einer bevorzugten Weiterbildung mit der Komponente des Getriebes, in der das Durchführungsrohr fixiert ist, d.h. mit dem Planetenträger gefügt.

Das Fixiermittel weist einen elektrischen Nichtleiter und einen Grundkörper auf. Letzterer besteht aus einem elektrisch leitfähigen Material. Der elektrische Nichtleiter ist zwischen dem Grundkörper und dem Planetenträger angeordnet.

Der Grundkörper ist so ausgestaltet, dass mindestens ein Teil des Grundkörpers radial zwischen dem Durchführungsrohr und dem Nichtleiter angeordnet ist. Dieser Teil des Grundkörpers ist bevorzugt in Umfangsrichtung in sich geschlossen. Insbesondere kann der Teil des Grundkörpers hohlzylindrisch geformt sein. Erfüllt bevorzugt einen zwischen dem Durchführungsrohr und dem Nichtleiter verlaufenden Zwischenraum vollständig aus. Weiterhin bevorzugt wird ein Grundkörper, dessen Material den gleichen Wärmeausdehnungskoeffizienten wie das Material des Durchführungsrohrs aufweist. Insbesondere können der Grundkörper und das Durchführungsrohr aus dem gleichen Material bestehen.

Die Ausgestaltung ist dann von Vorteil, wenn der Nichtleiter und das Durchführungsrohr einen unterschiedlichen Wärmeausdehnungskoeffizienten aufweisen. Dann bestünde die Gefahr, dass unterschiedliche Maßänderungen infolge von Temperaturschwankungen die axiale Beweglichkeit des Durchführungsrohrs in dem Fixiermittel beeinträchtigen. Der weiterbildungsgemäße Teil des Fixiermittels hingegen schirmt das Durchführungsrohr gegenüber Maßänderungen des Nichtleiters ab. Die axiale Beweglichkeit des Durchführungsrohrs bleibt so gewährleistet.

Die Anordnung ist bevorzugt mit einem Generator weitergebildet, der drehwirksam mit dem Getriebe verbunden ist. Dies bedeutet, dass eine Ausgangswelle des Getriebes drehfest mit einer Eingangswelle des Generators verbunden ist. Insbesondere können das Getriebe und der Generator einen integrierten Antriebsstrang bilden.

In einer darüber hinaus bevorzugten Weiterbildung ist eine Kupplung vorgesehen, welche die Ausgangswelle des Getriebes drehfest mit der Eingangswelle des Generators verbindet. Die Kupplung wirkt elektrisch isolierend. Dadurch ist eine vollständige elektrische Isolierung der spannungsgefährdeten Komponenten des Getriebes und des Generators gewährleistet.

Die Erfindung ermöglicht es, ein elektrisch leitendes Durchführungsrohr, etwa ein metallisches Durchführungsrohr zu verwenden.

Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
- Fig. 1: ein Fixiermittel mit Einlage; und
- Fig. 2: eine Kupplung.

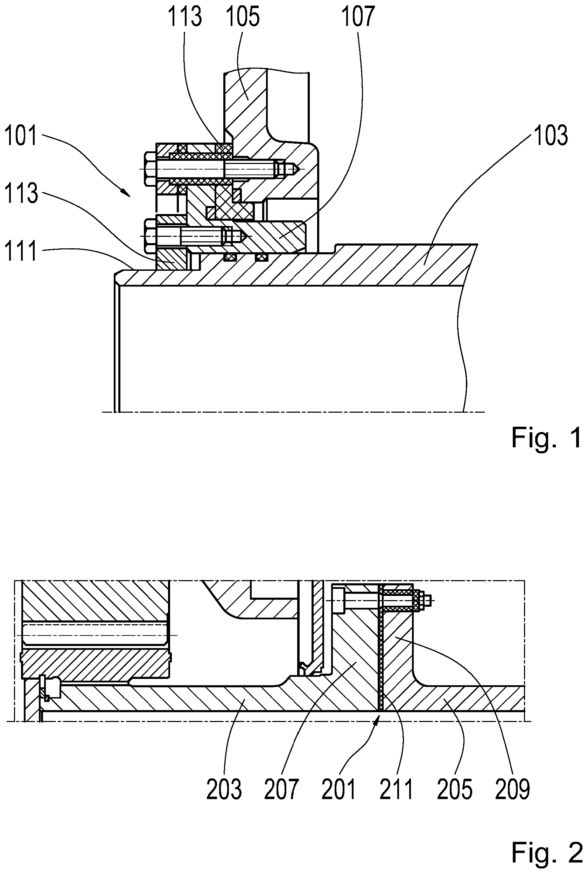

Das in Fig. 1 dargestellte Fixiermittel 101 dient dazu, ein Durchführungsrohr 103 antriebsseitig in einem Planetenträger 105 zu fixieren. Durch das Fixiermittel 101 wird insbesondere die radiale Position des Durchführungsrohrs 103 festgelegt. Das Fixiermittel 101 selbst ist starr in dem Planetenträger 105 fixiert, das heißt eine Fixierung zwischen dem Fixiermittel 101 und dem Planetenträger 105 lässt keinerlei Relativbewegungen zwischen dem Fixiermittel 101 und dem Planetenträger 105 zu.

Ein metallischer Grundkörper 107 des Fixiermittels 101 ist im Querschnitt L-förmig aufgebaut. Der Grundkörper 107 ist mit dem Planetenträger 105 verschraubt. Entsprechende Verschraubungen sind elektrisch isolierend ausgeführt.

Eine mit dem Grundkörper 107 verschraubte Nase 109 greift in eine Aussparung 109 des Durchführungsrohrs 103 ein, um das Durchführungsrohr 103 relativ zu dem Planetenträger 105 drehfest zu fixieren.

In einen zwischen dem Grundkörper 107 und dem Planetenträger 105 verlaufenden Spalt ist eine Isolierschicht 113 eingebracht. Diese besteht aus einem elektrischen Isolator, etwa Polyamid. Die Isolierschicht 113 isoliert den Grundkörper 107 und damit das Durchführungsrohr 103 elektrisch gegenüber dem Planetenträger 105. Wie der Querschnitt des Grundkörpers 107 ist auch der Querschnitt der Isolierschicht 113 L-förmig.

Der axiale Schenkel des im Querschnitt L-förmigen Grundkörpers 107 verläuft in axialer Richtung zwischen der Isolierschicht 113 und dem Durchführungsrohr 103. Auf diese Weise wird verhindert, dass sich Maßänderungen der Isolierschicht 113 infolge von Temperaturschwankungen auf das Durchführungsrohr 103 auswirken. So bleibt die axiale Verschiebbarkeit des Durchführungsrohrs 103 gegenüber dem Planetenträger 105 auch bei Temperaturschwankungen erhalten.

Die in Fig. 2 dargestellte Kupplung 201 verbindet eine ausgangsseitige Sonnenwelle 203 mit einer Eingangswelle 205 eines Generators. Die Sonnenwelle 203 bildet einen ersten Flansch 207 aus, die Eingangswelle 205 des Generators einen zweiten Flansch 209. Der erste Flansch 207 und der zweite Flansch 209 sind miteinander verschraubt. Auf diese Weise kommt eine drehfeste Verbindung zwischen dem ersten Flansch 207 und dem zweiten Flansch 209 zustande.

Zwischen dem ersten Flansch 207 und dem zweiten Flansch 209 befindet sich eine Scheibe 211, die aus einem elektrischen Isolator besteht. Auch die Verschraubungen des ersten Flansches 207 und des zweiten Flansches 209 sind mit elektrischen Isolatoren gekapselt. Somit sind die Sonnenwelle 203 und die Eingangswelle 205 des Generators elektrisch voneinander isoliert. In Kombination mit dem isolierten Durchführungsrohr wird eine vollständige Isolierung des Getriebes gegenüber dem Generator erreicht.

Von Vorteil ist eine derartige Kombination insbesondere, weil sie sich die Isolierungen vollständig im Bauraum des Getriebes anordnen lassen. Die Schnittstellen des Getriebes nach außen hin werden daher nicht beeinflusst.

### Bezugszeichen

- 101: Fixiermittel
- 103: Durchführungsrohr
- 105: Planetenträger
- 107: Grundkörper
- 111: Aussparung
- 113: Isolierschicht
- 201: Kupplung
- 203: Sonnenwelle
- 205: Eingangswelle
- 207: erster Flansch
- 209: zweiter Flansch
- 211: Scheibe

## Patentansprüche

1. Anordnung mit einem Getriebe für eine Windkraftanlage, einem durch das Getriebe hindurchführenden Durchführungsrohr (103), dessen Mündungen außerhalb des Getriebes angeordnet sind, und einem Fixiermittel (101); wobei das Durchführungsrohr (103) mittels des Fixiermittels (101) in einem drehbar gelagerten Planetenträger (105) des Getriebes fixiert ist; **dadurch gekennzeichnet, dass** das Fixiermittel (101) gegenüber dem Durchführungsrohr (103) elektrisch isolierend ausgeführt ist und das Durchführungsrohr (103) und den Planetenträger (105) elektrisch voneinander isoliert; wobei
das Fixiermittel (101) einen metallischen Grundkörper (107) und einen elektrischen Nichtleiter (113) aufweist; wobei
der Nichtleiter (113) zwischen dem Grundkörper (107) und dem Planetenträger (105) angeordnet ist; wobei
das Fixiermittel (101) starr in dem Planetenträger (105) fixiert ist; und wobei der Grundkörper (107) im Querschnitt L-förmig aufgebaut und mittels elektrisch isolierend ausgeführter Verschraubungen mit dem Planetenträger (105) verschraubt ist.

2. Anordnung nach Anspruch 1; **dadurch gekennzeichnet, dass**
das Durchführungsrohr (103) relativ zu dem Fixiermittel (101) axial beweglich ist.

3. Anordnung nach einem der vorhergehenden Ansprüche; **dadurch gekennzeichnet, dass**
das Fixiermittel (101) ein zentrisches, durchgehendes Loch aufweist; wobei
das Fixiermittel (101) in dem Loch mit dem Durchführungsrohr (103) gefügt ist.

4. Anordnung nach dem vorhergehenden Anspruch unter Rückbezug auf Anspruch 2; **dadurch gekennzeichnet, dass**
das Fixiermittel (101) entlang seines radial äußeren Randes mit dem Planetenträger (105) gefügt ist.

5. Anordnung nach einem der vorhergehenden Ansprüche; **dadurch gekennzeichnet, dass**
mindestens ein Teil des Grundkörpers (107) radial zwischen dem Durchführungsrohr (103) und dem Nichtleiter (113) angeordnet ist.

6. Anordnung nach einem der vorhergehenden Ansprüche; **gekennzeichnet durch** einen drehwirksam mit dem Getriebe verbundenen Generator.

7. Anordnung nach dem vorhergehenden Anspruch; **gekennzeichnet durch**
eine Kupplung (201), die eine Ausgangswelle (203) des Getriebes drehfest mit einer Eingangswelle (205) des Generators verbindet; wobei
die Kupplung (201) elektrisch isolierend ausgeführt ist.

## Claims

1. Arrangement having a transmission for a wind turbine, having a feed-through pipe (103), which leads through the transmission and whose openings are arranged outside the transmission, and having a fixing means (101), wherein
the feed-through pipe (103) is fixed by means of the fixing means (101) in a rotatably mounted planet carrier (105) of the transmission, **characterized in that**
the fixing means (101) is designed to be electrically insulating with respect to the feed-through pipe (103) and insulates the feed-through pipe (103) and the planet carrier (105) electrically from one another; wherein
the fixing means (101) has a metallic main body (107) and an electrical non-conductor (113), wherein the non-conductor (113) is arranged between the main body (107) and the planet carrier (105); wherein
the fixing means (101) is fixed rigidly in the planet carrier (105); and wherein
the main body (107) is of L-shaped construction in cross section and is screwed to the planet carrier (105) by means of screw connections of electrically insulating design.

2. Arrangement according to Claim 1, **characterized in that**
the feed-through pipe (103) is movable axially relative to the fixing means (101).

3. Arrangement according to one of the preceding claims, **characterized in that**
the fixing means (101) has a central through-hole, wherein
the fixing means (101) is joined to the feed-through pipe (103) in the hole.

4. Arrangement according to the preceding claim where referred back to Claim 2, **characterized in that**
the fixing means (101) is joined along its radially outer edge to the planet carrier (105).

5. Arrangement according to one of the preceding claims, **characterized in that**
at least one part of the main body (107) is arranged radially between the feed-through pipe (103) and the non-conductor (113).

6. Arrangement according to one of the preceding claims, **characterized by**
a generator which is connected in terms of rotational action to the transmission.

7. Arrangement according to the preceding claim, **characterized by**
a coupling (201) which connects an output shaft (203) of the transmission to an input shaft (205) of the generator in a rotationally conjoint manner, wherein
the coupling (201) is of electrically insulating design.

## Revendications

1. Agencement comprenant une boîte de vitesses pour une éolienne, un tube de traversée (103) passant à travers la boîte de vitesses dont les orifices sont situés en dehors de la boîte de vitesses, et un moyen de fixation (101) ; dans lequel
le tube de traversée (103) est fixé dans un porte-satellites (105) monté rotatif de la boîte de vitesses à l'aide du moyen de fixation (101) ;
**caractérisé en ce que** le moyen de fixation (101) est réalisé de manière électriquement isolante par rapport au tube de traversée (103), et le tube de traversée (103) et le porte-satellites (105) sont électriquement isolés l'un de l'autre ; dans lequel
le moyen de fixation (101) présente un corps de base (107) métallique et un isolant électrique (113) ; dans lequel
l'isolant (113) est disposé entre le corps de base (107) et le porte-satellites (105) ; dans lequel
le moyen de fixation (101) est fixé rigidement dans le porte-satellites (105) ; et dans lequel
le corps de base (107) est structuré en forme de L en section transversale et est vissé au porte-satellites (105) au moyen de raccords à vis réalisés de manière électriquement isolante.

2. Agencement selon la revendication 1, **caractérisé en ce que** le tube de traversée (103) est axialement mobile par rapport au moyen de fixation (101).

3. Agencement selon l'une quelconque des revendications précédentes, **caractérisé en ce que**
le moyen de fixation (101) présente un trou traversant central ; dans lequel
le moyen de fixation (101) est assemblé avec le tube de traversée (103) dans le trou.

4. Agencement selon la revendication précédente en référence à la revendication 2, **caractérisé en ce que** le moyen de fixation (101) est assemblé le long de son bord extérieur radial avec le porte-satellites (105).

5. Agencement selon l'une quelconque des revendications précédentes, **caractérisé en ce qu'**au moins une partie du corps de base (107) est disposée radialement entre le tube de traversée (103) et l'isolant (113).

6. Agencement selon l'une quelconque des revendications précédentes, **caractérisé par** un générateur relié en rotation à la boîte de vitesses.

7. Agencement selon la revendication précédente, **caractérisé**
**par** un embrayage (201) qui relie un arbre de sortie (203) de la boîte de vitesses de manière verrouillée en rotation à un arbre d'entrée (205) du générateur ; dans lequel
l'embrayage (201) est réalisé de manière électriquement isolante.
